# EUROPÄISCHE PATENTSCHRIFT

(11) **EP 0 413 090 B1**
(45) Veröffentlichungstag und Bekanntmachung des Hinweises auf die Patenterteilung: **02.03.1994**
(21) Anmeldenummer: 90108638.9
(22) Anmeldetag: 08.05.1990
(51) Int. Cl.: B60R 25/10

(54) **Einen oder mehrere Sensoren enthaltende Fahrzeugalarmvorrichtung**
Vehicle alarm device comprising one or several detectors
Dispositif d'alarme pour véhicule comprenant un ou plusiers détecteurs

(30) Priorität: 16.08.1989 DE 3926983
(43) Veröffentlichungstag der Anmeldung: 20.02.1991
(73) Patentinhaber: ROBERT BOSCH GMBH, 70442 Stuttgart (DE)
(72) Erfinder: Siegle, Gert, Prof.-Dr. rer. nat., D-1000 Berlin 38 (DE)

(56) Entgegenhaltungen:
- EP-A- 0 251 457
- EP-A- 0 366 378
- DE-A- 3 524 546
- GB-A- 2 218 835
- US-A- 4 651 157
- US-A- 4 821 309

## Beschreibung

### Stand der Technik

Die Erfindung geht aus von einer Fahrzeugalarmvorrichtung nach dem Oberbegriff der Ansprüche 1, 2. Es sind Fahrzeugalarmvorrichtungen bekannt, die z.B. bei einem unbefugten Öffnen einer Fahrzeugtür oder bei einer Lageänderung des Fahrzeuges einen auf das Fahrzeug beschränkten Alarm auslösen, indem z.B. die Warnblinkeinrichtung in Tätigkeit gesetzt wird und/oder die Hupe auf einen Dauerton oder einen intermittierenden Ton geschaltet wird. Bei dieser Art von Fahrzeugalarmvorrichtung, kann der Einbruch oder Diebstahl nur abgewehrt werden, wenn sich jemand in der Nähe des Fahrzeuges aufhält und auf das Warnsignal reagiert. Weiter bekannt ist aus der EP 0 251 457 A1 ein Fahrzeugalarmsystem, bei dem ein unbefugtes Einwirken auf das Fahrzeug mittels Sensoren erkannt wird, worauf eine gespeicherte Nachricht mittels eines Funktelefons an eine Empfangsstation gesendet wird. Die US-PS 4,821,309 offenbart ein Diebstahlschutzverfahren, bei dem bei einem von einem Sensor registrierten Einbruch oder ähnlichem ein Autotelefon dazu veranlaßt wird, eine Telefonverbindung mit einem abgespeicherten Telefonanschluß aufzubauen und bei Zustandekommen der Verbindung eine ebenfalls abgespeicherte Alarmnachricht an den Gesprächsteilnehmer zu senden. Des weiteren ist aus der EP 366 378 A2 eine Fahrzeugdiebstahl-Schutzvorrichtung bekannt, bei der bei erkannter Fremdeinwirkung auf das Fahrzeug ein Autotelefon eine Nachricht an ein anderes Fernsprechgerät sendet und gleichzeitig Geräusche aus dem Fahrzeuginnenraum mitsendet.

### Vorteile der Erfindung

Die erfindungsgemäße Fahrzeugalarmvorrichtung mit den kennzeichnenden Merkmalen des Anspruchs 1 hat demgegenüber den Vorteil, daß ohne zusätzlichen Aufwand ein herkömmliches Funktelefon zur Identifikation des Fahrzeugs dient, aus dem die Information gesendet wird und der Eigentümer, Halter oder Fahrer des Fahrzeuges und/oder die Polizei so schnell wie möglich über die Einbruchs- oder Diebstahlabsicht informiert werden. Außerdem kann mittels einer Zuordnungstabelle bei einer Institution wie z. B. der Polizei eine Ermittlung des zugehörigen Fahrzeugkennzeichens erfolgen, woraufhin eine Fahndung eingeleitet werden kann. Die erfindungsgemäße Fahrzeugalarmvorrichtung mit den kennzeichnenden Merkmalen des Anspruchs 2 bietet den Vorteil, daß zur Einleitung einer Fahndung eine Information über den Aufenthaltsort des Fahrzeugs automatisch übermittelt wird, was zu einer Erleichterung der Zielfindung dient. Insbesondere ist durch die automatische Ortsbestimmung nicht notwendig, daß der Fahrer Ortskenntnisse besitzt und nach jedem Standortwechsel eine Aktualisierung der abgespeicherten Ortsinformation vornehmen muß. Sollte das Fahrzeug von einem Dieb vom ursprünglichen Standort entfernt werden, so ist außerdem sogar eine Verfolgung anhand weiterer zu übertragenden Standortinformationen möglich.

Durch die in den abhängigen Ansprüchen aufgeführten Maßnahmen sind weitere vorteilhafte Maßnahmen und Verbesserungen möglich. Besonders vorteilhaft ist die Übermittlung eines Warntons, damit der angerufene Fernsprechteilnehmer oder die Funkzentrale sofort einen ankommenden Anruf als Alarmruf identifizieren kann. Die Übermittlung von individuellen Daten des Fahrzeugs dient in vorteilhafter Weise dazu, daß zusätzliche Informationen einer Zuordnung des Alarms zu einem bestimmten Fahrzeug, z. B. als Teil einer Fahrzeugflotte, insbesondere zu Hilfestellung bei einer Fahndung dienen.

### Zeichnung

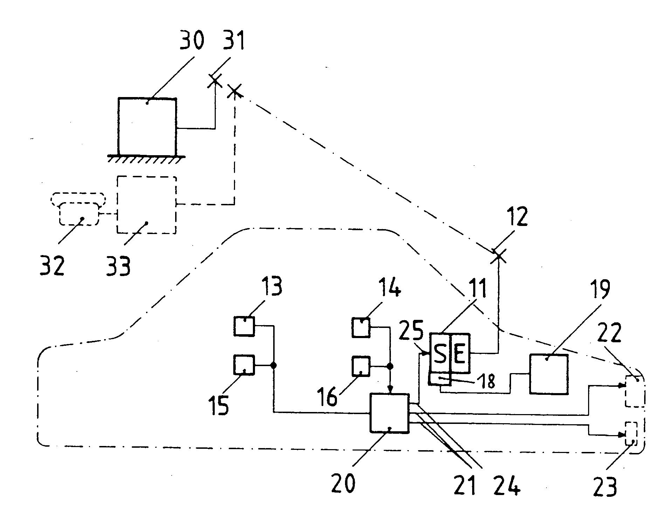

Ein Ausführungsbeispiel der Erfindung ist in der Zeichnung anhand eines einzigen, stark vereinfachten Blockschaltbildes dargestellt und in der nachfolgenden Beschreibung näher erläutert.

### Beschreibung

In der Figur symbolisiert die strichpunktierte Linie ein Kraftfahrzeug 10 mit eingebautem Funktelefon 11, das mit einer Fahrzeugsende- und empfangsantenne 12 verbunden sind. Mit 13 bis 16 sind vier, beispielsweise mechanisch-elektrische Sensoren bezeichnet, das sind im einfachsten Falle Türkontakte an den vier Fahrzeugtüren. Die Sensoren 13 bis 16 sind mit einem Alarmgeber 20 verbunden, dessen Ausgänge 21 z.B. mit der Fahrzeugbeleuchtung 22 und der Hupe 23 verbunden sind. Ein weiterer Ausgang 24 des Alarmgebers 20 ist mit einem Eingang 25 des Funktelefons 11 verbunden. Das Kraftfahrzeug 10 befindet sich im Sende- und Empfangsbereich einer Funkzentrale 30, mit einer Funksende- und -empfangsantenne 31.

Die vorstehend beschriebene Fahrzeugalarmvorrichtung hat folgende Funktion.

Wird eine der Fahrzeugtüren unberechtigterweise geöffnet, so spricht einer der Sensoren 13 bis 16 an und liefert an den Alarmgeber 20 eine Signalspannung, wodurch dieser veranlaßt wird, die Fahrzeugbeleuchtung 22 z.B. intermittierend und die Hupe 23 z.B. dauernd einzuschalten.

Parallel dazu wird über den Ausgang 24 des Alarmgebers 20 eine bestimmte Signalspannung dem Eingang 25 des Funktelefons 11 zugeführt. Das Funktelefon ist derart ausgebildet, daß es beim Eintreffen der bestimmten Signalspannung automatisch ein Quittungssignal abgibt, das sonst nur beim Eintreffen eines für das betreffende Funktelefon bestimmten Anrufs erzeugt wird. Dieses Quittungssignal wird über die Fahrzeugsende- und -empfangsantenne 12 abgestrahlt und von der Funkzentrale 30 empfangen. Da der Quittungsruf der individuellen Rufnummer des Funktelefons entspricht, kann die Rufnummer in der Funkzentrale z.B. auf einem Display angezeigt werden, wobei gleichzeitig ein optisches und/oder akustisches Signal die Bedienungsperson in der Funkzentrale auf den Alarm aufmerksam macht. Anhand der Rufnummer kann das polizeiliche Kennzeichen des Kraftfahrzeuges 10 ermittelt werden, so daß eine gezielte Fahndung nach dem Kraftfahrzeug eingeleitet werden kann. Ein weiterer Sensor kann auch als Lageschalter ausgebildet sein, der anspricht, wenn das Kraftfahrzeug beispielsweise bei einem unberechtigten Abtransport bewegt wird.

Eine alternative Alarmauslösung besteht darin, daß die Signalspannung am Eingang 25 des Funktelefons 11 automatisch eine Gesprächsverbindung zu einem bestimmten Fernsprechteilnehmer, z.B. 32, über eine Funküberleiteinrichtung 33 veranlaßt. Sobald die Gesprächsverbindung hergestellt ist, erhält der angerufene Fernsprechteilnehmer nach dem Abheben seines Handapparates einen bestimmten Warnton übermittelt, der beispielsweise durch den Alarmgeber 20 ausgelöst, in dem Funktelefon 11 erzeugt wird. Der gerufene Fernsprechteilnehmer, das ist z.B. der Eigentümer, Halter oder Fahrer des Kraftfahrzeuges 10, erkennt dadurch, daß es sich um einen in seinem Kraftfahrzeug ausgelösten Alarm handelt.

Zu dem Funktelefon 11 kann in einer bevorzugten Ausführungsform der Fahrzeugalarmvorrichtung ein Informationsspeicher 18 gehören, dessen Speicherplätze mit fahrzeugindividuellen Informationen, wie z.B. Kraftfahrzeugtyp, polizeiliches Kennzeichen und dergleichen, belegt sind. Wird dann im Alarmfall automatisch die vorgegebene Rufnummer eines Fernsprechteilnehmers, z.B. 32, ausgesendet und ist der Gesprächsaufbau zustandegekommen, so wird die gespeicherte Information nun an den gerufenen Fernsprechteilnehmer durchgegeben. Dadurch können z.B. auch die einzelnen Kraftfahrzeuge der einem Eigentümer gehörenden Fahrzeugflotte unterschieden werden. Die fahrzeugspezifischen Daten können auch an die Funkzentrale 30 übermittelt werden. Zu diesem Zweck kann beispielsweise das Quittungssignal durch die fahrzeugindividuellen Informationen ergänzt werden.

Besonders vorteilhaft ist es, wenn der Informationsspeicher 18 des Funktelefons 11 mit einer ebenfalls in dem Kraftfahrzeug 10 enthaltenen, dem Fachmann bekannten Vorrichtung zur Standortbestimmung 19 verbunden ist. Dem Informationsspeicher 18 wird entweder laufend oder nur im Alarmfall die jeweils neueste Standortinformation des Kraftfahrzeuges 10 zugeführt. Damit erhält die Funkzentrale 30 bzw. die Polizei den augenblicklichen Standort des Kraftfahrzeuges mitgeteilt, so daß die Fahndung nach dem Fahrzeug eingeleitet werden kann.

Die vorstehend erläuterten Maßnahmen zur Alarmierung und Informationsübertragung können in beliebiger Weise kombiniert werden, wobei die Informationen in analoger oder auch in digitaler Form übertragen werden können. An die Stelle des Funktelefons 11 kann gegebenenfalls auch ein Kraftfahrzeugfunkgerät treten.

## Patentansprüche

1. Einen oder mehrere Sensoren (13, 14, 15, 16) enthaltende Fahrzeugalarmvorrichtung mit einem Funktelefon (11) und einem Informationsspeicher (18), bei der ein mit den Sensoren (13, 14, 15, 16) verbundener Alarmgeber (20) bei einem Einbruchs- oder Diebstahlsversuch das Funktelefon (11) zur Aussendung einer im Informationsspeicher (18) abgespeicherten Information an eine Funkzentrale (30) oder einen vorgegebenen Fernsprechteilnehmer (32) veranlaßt, und ein optisches und/oder akustisches Signal im Fahrzeug (10) auslöst, dadurch gekennzeichnet, daß die Information ein die Rufnummer des Funktelefons (11) enthaltendes Quittungssignal aufweist.

2. Einen oder mehrere Sensoren (13, 14, 15, 16) enthaltende Fahrzeugalarmvorrichtung mit einem Funktelefon (11) und einem Informationsspeicher (18), bei der ein mit den Sensoren (13, 14, 15, 16) verbundener Alarmgeber (20) bei einem Einbruchs- oder Diebstahlsversuch das Funktelefon (11) zur Aussendung einer im Informationsspeicher (18) abgespeicherten Information an eine Funkzentrale (30) oder einen vorgegebenen Fernsprechteilnehmer (32) veranlaßt, und ein optisches und/oder akustisches Signal im Fahrzeug (10) auslöst, dadurch gekennzeichnet, daß eine im Fahrzeug (10) vorgesehene Vorrichtung zur Standortbestimmung (19) spätestens im Alarmfall eine den augenblicklichen Standort des Fahrzeugs (10) enthaltende Information speichert und der Funkzentrale (30) mittels des Funktelefons (11) mitteilt.

3. Einen oder mehrere Sensoren (13, 14, 15, 16) enthaltende Fahrzeugalarmvorrichtung nach einem der Ansprüche 1, 2, dadurch gekennzeichnet, daß die Funkzentrale (32) oder der vorgegebene Fernsprechteilnehmer (32) nach zustandegekommenem Gesprächsaufbau einen bestimmten Warnton mitgeteilt erhält.

4. Einen oder mehrere Sensoren (13, 14, 15, 16) enthaltende Fahrzeugalarmvorrichtung nach einem der Ansprüche 1, 2, dadurch gekennzeichnet, daß der Informationsspeicher (18) individuelle Daten des Fahrzeugs (10), wie z.B. Fahrzeugtyp, polizeiliches Kennzeichen, Standort des Fahrzeuges (10) oder dergleichen, enthält und daß die Alarmvorrichtung im Alarmfall nach zustandegekommenem Verbindungsaufbau die gespeicherte Information an den gerufenen Teilnehmer (32) bzw die Funkzentrale (30) automatisch überträgt.

## Claims

1. Vehicle alarm containing one or more sensors (13, 14, 15, 16) and having a radio telephone (11) and an information memory (18), in which alarm an alarm signal generator (20) which is connected to the sensors (13, 14, 15, 16) causes, in the event of an attempted break-in or theft, the radio telephone (11) to transmit an item of information stored in the information memory (18) to a radio control station (30) or a predetermined party (32) and causes a visual and/or audible signal to be triggered in the vehicle (10), characterized in that the information has an acknowledgement signal which contains the call number of the radio telephone (11).

2. Vehicle alarm containing one or more sensors (13, 14, 15, 16) and having a radio telephone (11) and an information memory (18), in which alarm an alarm signal generator (20) which is connected to the sensors (13, 14, 15, 16) causes, in the event of an attempted break-in or theft, the radio telephone (11) to transmit an item of information stored in the information memory (18) to a radio control station (30) or a predetermined party (32) and causes a visual and/or audible signal to be triggered in the vehicle (10), characterized in that a locating device (19), provided in the vehicle (10), stores, at the latest in the event of an alarm, an item of information containing the momentary location of the vehicle (10) and informs the radio control station (30) of this by means of the radio telephone (11).

3. Vehicle alarm containing one or more sensors (13, 14, 15, 16), according to one of Claims 1, 2, characterized in that the radio control station (32) or the predetermined party (32 [sic]) has a specific warning tone transmitted to it after a call setup has been realized.

4. Vehicle alarm containing one or more sensors (13, 14, 15, 16), according to one of Claims 1, 2, characterized in that the information memory (18) contains individual data on the vehicle (10), such as for example vehicle type, official registration number, location of the vehicle (10) or the like, and in that, in the event of an alarm being issued, the alarm transmits the stored information automatically to the called party (32) or the radio control station (30) after a connection setup has been realized.

## Revendications

1. Dispositif d'alarme pour véhicule comprenant un ou plusieurs détecteurs (13, 14, 15, 16) avec un radiotéléphone (11) et une mémoire d'information (18), dans lequel un transmetteur d'alarme (20) relié aux détecteurs (13, 14, 15, 16) sollicite, lors d'une tentative d'effraction ou de vol, le radiotéléphone (11) à émettre une information mémorisée dans la mémoire (18) à un central radio (30) ou à un abonné (32) prédéterminé et déclenche un signal optique et/ou acoustique dans le véhicule (10), caractérisé en ce que l'information comporte un signal d'identification contenant le numéro d'appel du radiotéléphone (11).

2. Dispositif d'alarme pour véhicule comprenant une ou plusieurs alarmes pour véhicule avec un radiotéléphone (11) et une mémoire d'information (18), dans lequel un transmetteur d'alarme (20) relié aux détecteurs (13, 14, 15, 16) sollicite, lors d'une tentative d'effraction ou de vol, le radiotéléphone (11) à émettre une information mémorisée dans la mémoire (18) a un central radio (30) ou à un abonné (32) prédéterminé et déclenche un signal optique et/ou acoustique dans le véhicule (10),
caractérisé en ce qu'un dispositif prévu dans le véhicule (10) pour la détermination de l'emplacement (19) au plus tard en cas d'alarme mémorise une information contenant l'emplacement instantané du véhicule (10) et le traitement au central radio (30) au moyen du radio-téléphone.

3. Dispositif d'alarme pour véhicule comprenant un ou plusieurs détecteurs (13, 14, 15, 16) selon une des revendications 1 et 2, caractérisé en ce que le central radio (30) ou un abonné (32) obtient la transmission d'une tonalité d'alarme déterminée après réalisation et obtention de la communication.

4. Dispositif d'alarme pour véhicule comprenant un ou plusieurs détecteurs (13, 14, 15, 16) selon une des revendications 1, 2, caractérisé en ce que :
- la mémoire d'information (18) contient des données propres du véhicule (10), comme par exemple type de véhicule, caractéristiques de police, emplacement du véhicule (10) ou éléments semblables et
- ce que le dispositif d'alarme une fois la liaison réalisée transmet automatiquement l'information mémorise à l'abonné (32) appelé ou au central radio (30).
